# EUROPÄISCHE PATENTANMELDUNG

(11) **EP 1 020 662 A2**
(43) Veröffentlichungstag der Anmeldung: **19.07.2000**
(21) Anmeldenummer: 99120335.7
(22) Anmeldetag: 12.10.1999
(51) Int. Cl.: F16H 57/02

(54) **Getriebe mit Entlüftungsöffnung**

(30) Priorität: 16.01.1999 DE 19901841
(71) Anmelder: NEUGART GMBH & CO., D-77971 Kippenheim (DE)
(72) Erfinder: Cihlar, Bernd, 79110 Freiburg (DE); Bühler, Berthold, 77933 Lahr (DE)
(74) Vertreter: Schmitt, Hans, Dipl.-Ing.

(57) **Zusammenfassung**

Ein Gehäuse (2) beispielsweise eines Getriebes (1) weist selbst oder in einem ihm zugehörenden Flansch (3) wenigstens eine Entlüftungsöffnung (4) auf, in welcher eine durch Druckunterschiede verformbare Membrane (5) angeordnet ist, die einen Luftzutritt in das Innere des Gehäuses (2) unterbindet und dennoch einen Druckausgleich erlaubt, weil eine Seite der Membrane (5) mit dem Inneren des Gehäuses (2) beispielsweise über eine Öffnung (7) und Kanäle oder dergleichen und die andere Seite der Membrane (5) mit der äußeren Umgebung in Verbindung sind. Die Membrane (5) ist für eine bestmögliche Volumenausnutzung im wesentlichen kappenförmig ausgebildet und hat ausgehend von einem umlaufenden Halterand (6) eine über wenigstens einen Teil dieses Halterandes (6) verlaufende oder am gesamten Halterand (6) umlaufende Seitenwand (10) sowie einen Boden (11), in den diese Seitenwand (10) übergeht. Dabei ist wenigstens ein Teil beziehungsweise die gesamte Seitenwand (10) zusammen mit dem Boden (11) gegenüber dem Halterand (6) beweglich und umstülpbar, so daß eine solche Membrane insgesamt ein großes Entlüftungsvolumen auf kleinem Raum umgrenzt.

## Beschreibung

Die Erfindung betrifft ein Getriebe, insbesondere Planetengetriebe, mit einem Gehäuse und mit wenigstens einer in der Gehäusewand angeordneten Entlüftungsöffnung, in welcher eine durch Druckunterschiede verformbare Membrane angeordnet und mit einem Halterand befestigt ist, wobei eine Seite der Membrane mit dem Inneren des Gehäuses und die andere Seite mit der äußeren Umgebung in Verbindung steht.

Ein derartiges Getriebe ist aus der DE 40 18 601 A1 bekannt. Dabei ist eine scheibenförmige Membrane vorgesehen, die mit ihrem Halterand eingespannt ist und deren beide Verformungsendstellungen einen etwa linsenförmigen Raum umgrenzen. In Ausgangsstellung ist diese Membrane konkav zum Inneren des Gehäuses hin gewölbt, während sie bei einem Überdruck in dem Gehäuse konvex nach außen gewölbt ist. Dies bedeutet, daß nur ein sehr begrenztes Volumen für einen Druckausgleich zur Verfügung steht, der zum Beispiel bei größeren Temperaturschwankungen in dem Getriebehäuse unzureichend sein kann.

Aus DE 34 39 225 C2 ist ein Getriebe mit einem Druckausgleich in dem Gehäuse bekannt, bei welchem ein etwa wie ein Faltenbalg geformter membranartiger Hohlkörper vorgesehen ist. Ein solcher membranartiger Faltenbalg ist aufwendiger in der Herstellung und in der Montage und hat einen relativ großen Platzbedarf.

Es besteht deshalb die Aufgabe, ein Getriebe oder Getriebegehäuse der eingangs genannten Art mit einer Membrane für den Druckausgleich zu schaffen, bei welchem auf engem Raum ein großes Volumen für den Druckausgleich zur Verfügung steht, wobei eine einfache Montage möglich sein soll.

Zur Lösung dieser Aufgabe ist das eingangs definierte Getriebe, welches ein Planetengetriebe, aber auch ein Getriebe gemäß DE 34 39 225 oder ein Gehäuse gemäß DE 40 18 601 sein kann, dadurch gekennzeichnet, daß die Membrane im wesentlichen kappenförmig ausgebildet ist und ausgehend von ihrem umlaufenden Halterand eine über wenigstens einen Teil dieses Halterandes verlaufende oder an dem gesamten Halterand umlaufende Seitenwand sowie einen Boden aufweist, in den die Seitenwand übergeht, und daß wenigstens ein Teil der Seitenwand zusammen mit dem Boden gegenüber dem Halterand beweglich und umstülpbar ist.

Dadurch ergibt sich einerseits eine Membrane von verhältnismäßig einfacher Form, die auch entsprechend einfach hergestellt und eingebaut bzw. montiert werden kann und die gleichzeitig auch bei verhältnismäßig begrenztem Raum für den Halterand dennoch ein relativ großes Ausgleichsvolumen für den Druckausgleich ermöglicht, weil diese kappenförmige Membrane aufgrund der Seitenwand umgestülpt werden kann, so daß also praktisch doppelt soviel Volumen für den Druckausgleich zur Verfügung stehen kann, wie von dieser kappenförmigen Membrane selbst zwischen dem Halterand, den Seitenwänden und dem Boden umgrenzt wird. Aufgrund der Seitenwände ergibt sich dabei dieses erheblich größere Volumen als bei einer etwa scheibenförmigen und jeweils nach beiden Seiten auswölbbaren Membrane, die lediglich einen etwa linsenförmigen Ausgleichsraum begrenzen kann.

Zweckmäßig ist es dabei, wenn der Boden der Membrane etwa parallel zu der von ihrem Halterand aufgespannten Ebene verläuft und die umlaufende Seitenwand über ihre gesamte Erstreckung jeweils eine im wesentlichen gleichbleibende Höhe hat. Zwar wäre auch denkbar, daß die Seitenwand in ihrem Verlauf eine sich ändernde Höhe hat, also der Boden gegenüber der von dem Halterand aufgespannten Ebene schräg verläuft, jedoch ergibt sich bei einer gleichmäßig hohen Seitenwand eine optimale Ausnutzung der Grundrißfläche in Bezug auf das Ausgleichsvolumen. Steht genügend Innenraum zur Verfügung, kann dabei außerdem der Boden selbst noch zusätzlich bei entsprechenden Druckänderungen nach der einen oder anderen Seite gewölbt werden.

Für eine bestmögliche Platzausnutzung ist es dabei zweckmäßig, wenn die von dem Halterand der Membrane gebildete Grundrißlinie im wesentlichen etwa rechteckig, quadratisch oder oval ausgebildet ist und vorzugsweise wenigstens zwei etwa parallele Seitenbegrenzungslinien hat. Gegenüber einer runden Membrane für einen etwa linsenförmigen Volumenausgleichsraum ergibt sich so ein größeres Volumen, wenn beispielsweise eine quadratische Membran Seitenlängen hat, die dem Durchmesser der kreisscheibenförmigen Membrane entsprechen. Schon dies steigert das zur Verfügung stehende Druckausgleichsvolumen. Häufig bieten Getriebe aber auch Platz für längliche Öffnungen, in denen dann also eine rechteckige oder ovale oder in anderer geeigneter Weise bemessene Membrane untergebracht werden kann.

Eine andere Gestaltung und Ausführungsform der Erfindung kann vorsehen, daß die von dem Halterand der Membrane gebildete Grundrißform ein Kreis oder ein Ring, insbesondere ein Kreisring, oder ein Ringsegment ist und in eine Entlüftungsöffnung paßt, die die Form etwa eines Zylinders oder einer Ringnut hat. Dies ergibt wiederum eine Membrane von verhältnismäßig einfacher Form, die in der Entlüftungsöffnung beziehungsweise einem Druckausgleichsraum ein relativ großes Ausgleichsvolumen für den Druckausgleich ermöglicht, weil sie durch die Formgebung ihrer Seitenwand und des Bodens umgestülpt werden kann, also praktisch doppelt so viel Volumen für den Druckausgleich ergibt, wie sie selbst einnimmt, jedoch kann die Entlüftungsöffnung beziehungsweise Druckausgleichskammer einfacher hergestellt werden, weil kreisrunde Formen durch Bohren oder Drehen, also fertigungstechnisch günstig hergestellt werden können.

Ferner kann für den Fall einer kreisringförmigen oder ringsegmentförmigen Membrane eine Entlüftungsöffnung in analoger Form beispielsweise konzentrisch zu einer Getriebewelle an einem Deckel oder Getriebeabschluß platzsparend und dennoch effektiv untergebracht werden.

Beispielsweise kann die Membrane zwei parallele Seitenwände haben, die durch den Boden der Membrane zu einem U-förmigen Querschnitt verbunden sind, wobei diese Seitenwände und der Boden als Ring, insbesondere Kreisring oder als Segment eines Ringes ausgebildet sein können. Dies ergibt einen Querschnitt der Membrane, wie er vorstehend mit anderen Grundrißformen schon beschrieben wurde, erlaubt aber, eine relativ schmale Membrane dennoch großvolumig zu gestalten, wobei die diese Membrane aufnehmende Entlüftungsöffnung in vorteilhafter Weise kreisringförmig verläuft, also einfach herstellbar ist.

Die Entlüftungsöffnung kann in der Gehäusewand oder in einem Befestigungsflansch des Getriebes angeordnet und wenigstens doppelt so tief wie die Höhe der Seitenwand der Membrane sein und die Befestigung des Halterandes der Membrane kann etwa in halber Höhe dieser Entlüftungsöffnung vorgesehen sein. Dadurch wird ermöglicht, daß die kappenförmige Membrane innerhalb dieser Entlüftungsöffnung von ihrer Ausgangslage zur Außenseite des Gehäuses hin ausgestülpt wird, wenn im Inneren des Gehäuses der Druck ansteigt, und auch wieder zurückgestülpt wird, wenn dieser Überdruck innerhalb des Gehäuses verschwunden ist. Gleichzeitig wird dabei vermieden, daß die Membrane vor allem nach dem Ausstülpen nach außen hin über den Umriß der Gehäusewandung oder des Flansches herauskommt. Somit können Beschädigungen der Membrane vermieden werden und ferner wird vermieden, daß die Membrane durch dem Gehäuse benachbarte Aggregate oder dergleichen an ihrer vollständigen Ausstülpung gehindert wird.

Die Entlüftungsöffnung kann einen insbesondere lösbaren oder öffenbaren Abschlußdeckel aufweisen. Dadurch kann die Membrane noch besser gegen äußere Einflüsse, insbesondere Beschädigungen oder Verschmutzungen, geschützt werden. Dennoch kann sie sich innerhalb der Entlüftungsöffnung bis an den Deckel ungehindert ausstülpen und ebenso ungehindert wieder zurückverformen.

Für eine Vereinfachung der Befestigung der Membrane ist es zweckmäßig, wenn sie an ihrem Halterand einen nach außen überstehenden Flansch zum Einklemmen oder Einspannen innerhalb der Entlüftungsöffnung aufweist. Dies erlaubt eine mechanische Befestigung, die auch einen leichteren Austausch ermöglicht, obwohl auch eine Membrane ohne einen solchen flanschartigen Rand mit ihrem Halterand eingeklemmt, eingeklebt oder sonstwie befestigt werden könnte.

Eine weitere Ausgestaltung der Erfindung und insbesondere der Fixierung der Membrane kann darin bestehen, daß der Abschlußdeckel gleichzeitig zum Einspannen der Membrane bzw. ihres Halterandes im Inneren der Entlüftungsöffnung an einem Gegenabsatz vorgesehen ist und dazu in das Innere der Entlüftungsöffnung eingreifende, vorzugsweise entlang der Wandung der Entlüftungsöffnung verlaufende Vorsprünge oder einen umlaufenden Rand aufweist, der den insbesondere flanschartig umlaufenden Halterand der Membrane gegen eine Anlagefläche im Inneren der Entlüftungsöffnung drückt und festlegt. Durch das Schließen des Deckels kann also gleichzeitig die Membrane fixiert werden bzw. umgekehrt genügt es zum Auswechseln der Membrane, den Deckel, der beispielsweise mittels Schrauben oder durch Verschraubung befestigt sein kann, zu öffnen. Das Herausnehmen des Deckels macht dann die Membrane nicht nur zugänglich, sondern gibt sie auch gleichzeitig frei, so daß sie auf einfache Weise ausgewechselt werden kann. Entsprechend einfach ist auch bereits die Erstmontage.

Der vorerwähnte Deckel kann je nach Grundrißform der Membrane an diese und insbesondere die sie aufnehmende Entlüftungsöffnung angepaßt sein. Für eine kreisförmige oder ringförmige oder ringsegmentförmige Membrane kann demgemäß auch ein entsprechend kreisförmiger, ringförmiger oder ringsegmentförmiger Deckel mit etwa U-förmigem Querschnitt zum lösbaren Verschließen der entsprechend geformten Entlüftungsöffnung und zum Festlegen der kreisförmigen, der ringförmigen oder der ringsegmentförmigen Membrane vorgesehen sein und wenigstens eine oder gegebenenfalls mehrere an seinem oberen Umfang verteilte Öffnungen für den Luftausgleich aufweisen. Der vorerwähnte Deckel kann also jeweils an die Form der Entlüftungsöffnung und demgemäß an die entsprechende Form der Membrane angepaßt sein und den Halterand der Membrane, insbesondere auch einen entsprechenden Flansch an dem Halterand, der auch bei einer kreisringförmigen Membrane zweckmäßig sein kann, erfassen.

Für ein leichtes und den Druckausgleich unterstützendes Verformungsverhalten der Membrane ist es vorteilhaft, wenn der Übergang zwischen der Seitenwand und dem Boden der Membrane und/oder Richtungswechsel der Seitenwände gerundet oder abgeschrägt sind. Dadurch wird zwar das von der kappenförmigen Membrane umgrenzte Volumen etwas vermindert, jedoch wird einerseits die Herstellung der Membrane und andererseits ihre Verformung im ständigen Betrieb erleichtert. Scharfkantige Übergänge könnten einer allmählichen Verformung und Umstülpung zumindest zunächst einen gewissen Widerstand entgegensetzen.

Die Membrane kann zweckmäßigerweise aus flexiblem Gummi oder Kunstgummi oder aus einem flexiblen thermoplastischen Elastomer bestehen und - neben einer guten Biegsamkeit - eine elastische Dehnfähigkeit aufweisen. Dies hat den Vorteil, daß beim Umstülpen vor allem die gerundeten Übergänge durch den von innen her auftretenden Überdruck noch etwas elastisch gedehnt werden können, so daß ein entsprechend größeres Volumen für den Durckausgleich zur Verfügung steht.

Die umlaufende Seitenwand kann gegenüber der von dem Halterand aufgespannten Ebene in unverformter Lage unter einem kleineren Winkel als 90° angeordnet und demgemäß schräg zur Mitte der Membrane hin geneigt sein, so daß die Fläche des Bodens kleiner als die von dem Halterand umgrenzte Fläche ist. Die kappenförmige Membrane ist also ausgehend von ihrem Halterand zum Boden hin etwas konisch verjüngend gestaltet, um die Herstellung zu erleichtern, das heißt einander gegenüberliegende oder parallele Seitenwände der Membrane, auch bei kreisringförmiger oder kreissegmentförmiger Gestaltung laufen im Querschnitt von dem Boden ausgehend etwas auseinander, so daß sich der Querschnitt der Membrane von dem Boden zu ihrem Rand hin jeweils erweitert. Beispielsweise kann die Seitenwand gegenüber der Grundfläche von einem rechten Winkel um etwa 5° abweichen. Dennoch erlaubt die Dehnfähigkeit und Elastizität der Membrane bei entsprechendem Innendruck nach ihrem Umstülpen eine elastische Verformung, durch welche die Seitenwand in eine etwa parallele bzw. vertikale Position gelangt und sich an der Innenseite der Entlüftungsöffnung anlegt. Somit kann in für die Fertigung vorteilhafter Weise scheinbar auf einen Teil des Innenvolumens der kappenförmigen Membrane verzichtet werden, weil dieses Volumen aufgrund der Dehnfähigkeit der Membrane dennoch zur Verfügung steht.

Zwischen den Wandungen der Entlüftungsöffnung und dem Abschlußdeckel kann im Querschnitt gesehen ein rechter Winkel vorgesehen sein. Somit können die Wandungen der Entlüftungsöffnung in zweckmäßiger Weise rechtwinklig zur Gehäuseoberfläche oder zur Oberfläche des Flansches verlaufen, da sich die Membrane aufgrund ihrer Elastizität und Dehnfähigkeit auch dann daran anlegen läßt, wenn sie selbst eine etwas schräg geneigte Seitenwandung hat.

Der Effekt einer elastischen Verformung und Dehnung der Membrane durch den Innendruck wird unterstützt, wenn die Dicke der Membrane 1 mm oder weniger, insbesondere etwa 3/4 mm, 1/2 mm oder noch weniger beträgt. Denkbar wäre beispielsweise auch eine Membrane von nur etwa 1/3 mm oder 1/4 mm Dicke. Andererseits besteht bei einer zu dünnen Membrane wiederum die Gefahr, daß bei der Fertigung oder der Montage eine ungewollte Beschädigung auftritt, durch welche die Membrane unbrauchbar würde.

Vor allem bei Kombination einzelner oder mehrerer der vorbeschriebenen Merkmale und Maßnahmen ergibt sich die Möglichkeit, den Druckausgleich innerhalb eines Getriebegehäuses oder auch eines sonstigen Gehäuses auch unter beengten Platzverhältnissen effektiv zu gestalten, weil durch die gewählte Form der Membrane und die Anpassung der Entlüftungsöffnung selbst, innerhalb welcher sich diese Membrane befindet, ein großes Volumen für diesen Druckausgleich zur Verfügung gestellt wird.

Nachstehend sind Ausführungsbeispiele der Erfindung anhand der Zeichnung näher beschrieben. Es zeigt in zum Teil schematisierter Darstellung:

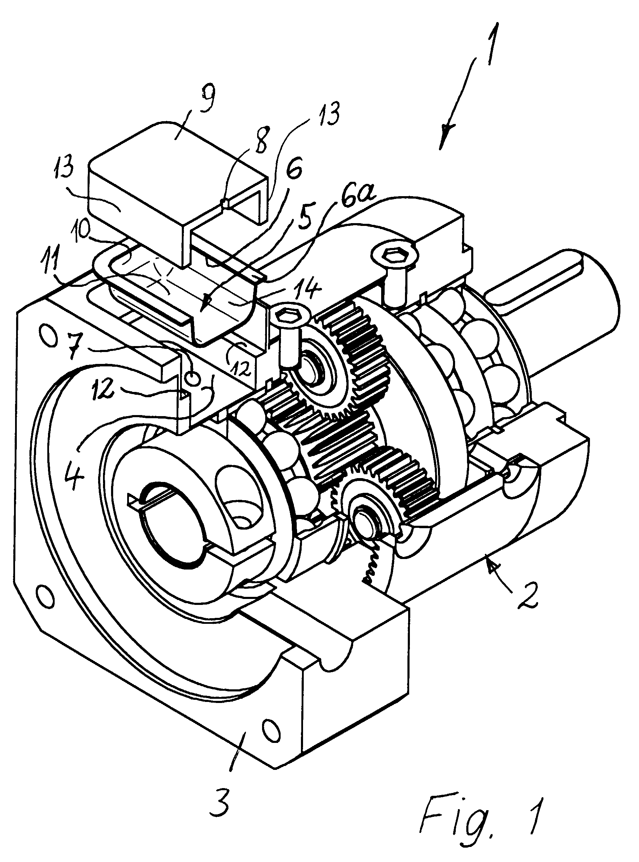

- Fig.1: das teilweise aufgeschnittene Gehäuse mit Befestigungsflansch eines Planetengetriebes in schaubildlicher Darstellung, wobei in einer Schmalseite des Befestigungsflansches eine Entlüftungsöffnung mit einer Membrane für den Druckausgleich vorgesehen ist, wobei die Entlüftungsöffnung, die dort hineinpassende Membrane und ein Abschlußdeckel auseinandergezogen in Form einer Explosionszeichnung dargestellt sind und die Entlüftungsöffnung, die Membrane und der Deckel aufgrund der Schnittdarstellung ebenfalls nur teilweise zu sehen sind,

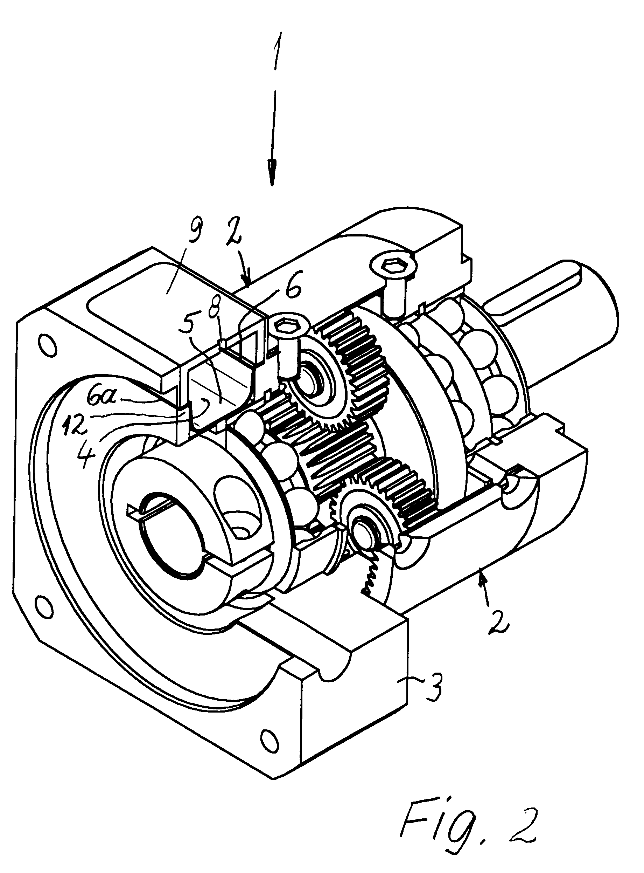

- Fig.2: eine der Fig.1 entsprechende Darstellung nach der Montage und dem Einsetzen der Membrane und des Deckels, wobei aufgrund der Schnittdarstellung etwa die Hälfte der Entlüftungsöffnung, der Membrane und des Deckels fehlen,

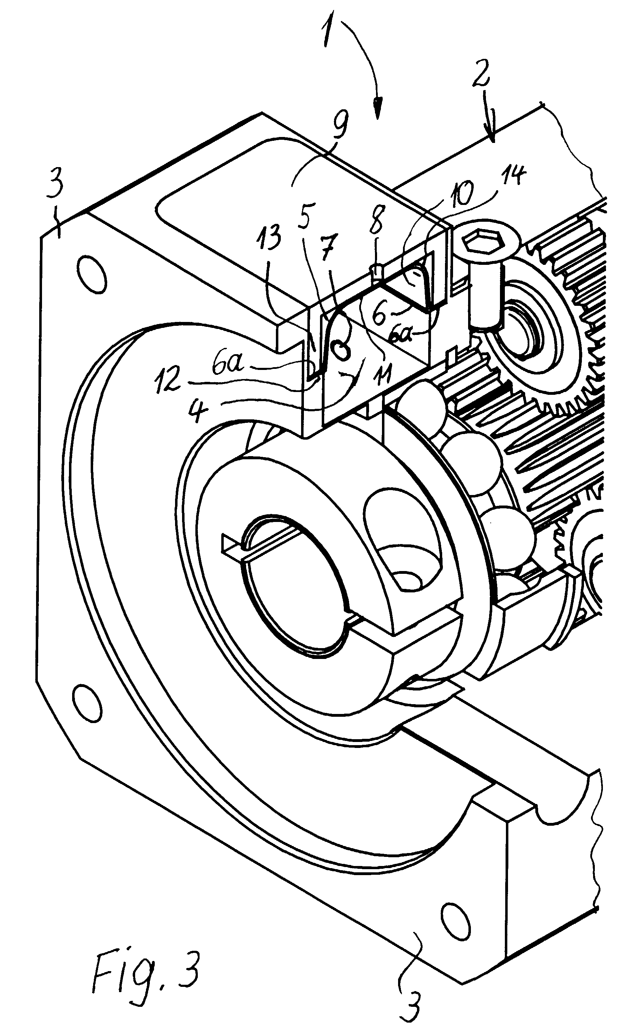

- Fig.3: in vergrößertem Maßstab den Befestigungsflansch mit der durch die Schnittdarstellung verkürzten Entlüftungsöffnung, Membrane und Deckel, wobei gegenüber Fig.2 der Innendruck des Getriebes so angestiegen ist, daß die Membrane aus einer Ausgangslage nach außen zum Deckel hin verformt und ausgestülpt ist,

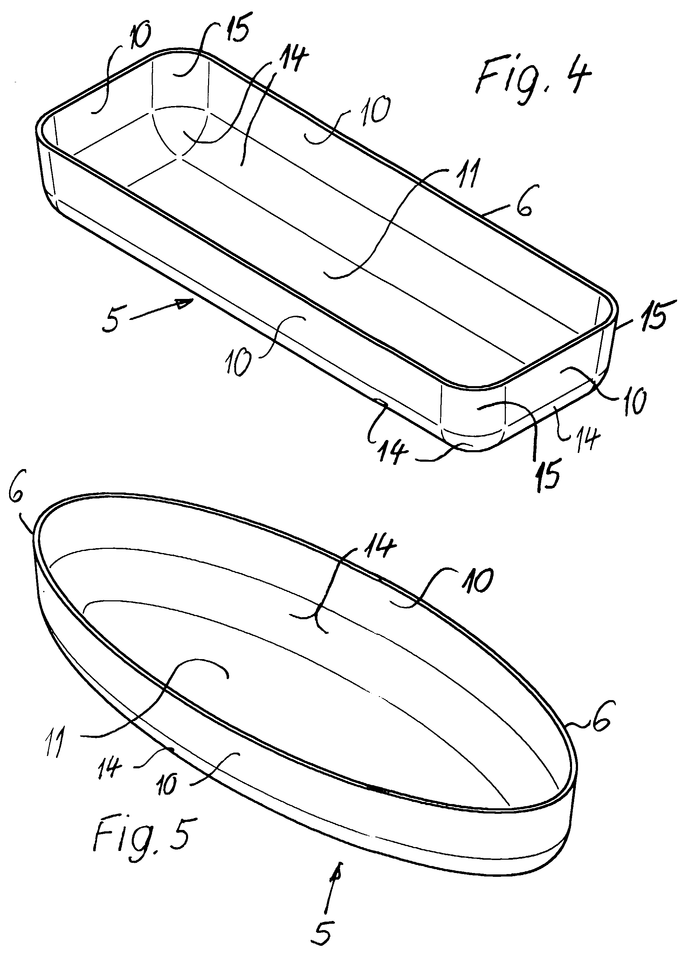

- Fig.4 bis 7: jeweils in schaubildlicher Darstellung kappenförmige Membrane unterschiedlicher Kontur, die je nach Form der Entlüftungsöffnung gewählt werden könnten, wobei in diesem Falle die Membrane keinen flanschartig umlaufenden Rand haben, sondern mit ihrem Halterand eingeklebt oder in Querrichtung verklemmt werden können, aber auch einen flanschartig umlaufenden Halterand haben könnten,

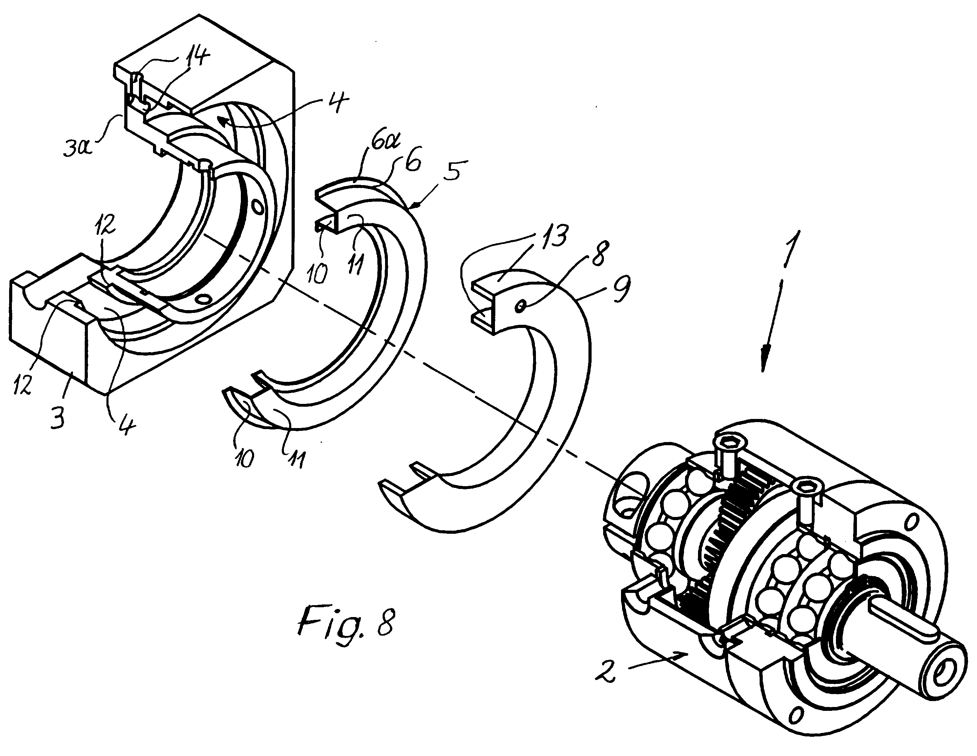

- Fig.8: eine Explosionsdarstellung eines teilweise aufgeschnittenen Getriebes vor dem endgültigen Zusammenfügen, wobei in einem zu dem Gehäuse gehörenden Befestigungsflansch des Getriebes eine ringförmige Entlüftungsöffnung als Druckausgleichsraum für eine ringförmige Membrane und einen ringförmigen Deckel vorgesehen sind und die Membrane und der Deckel vor dem Einsetzen dargestellt sind, sowie

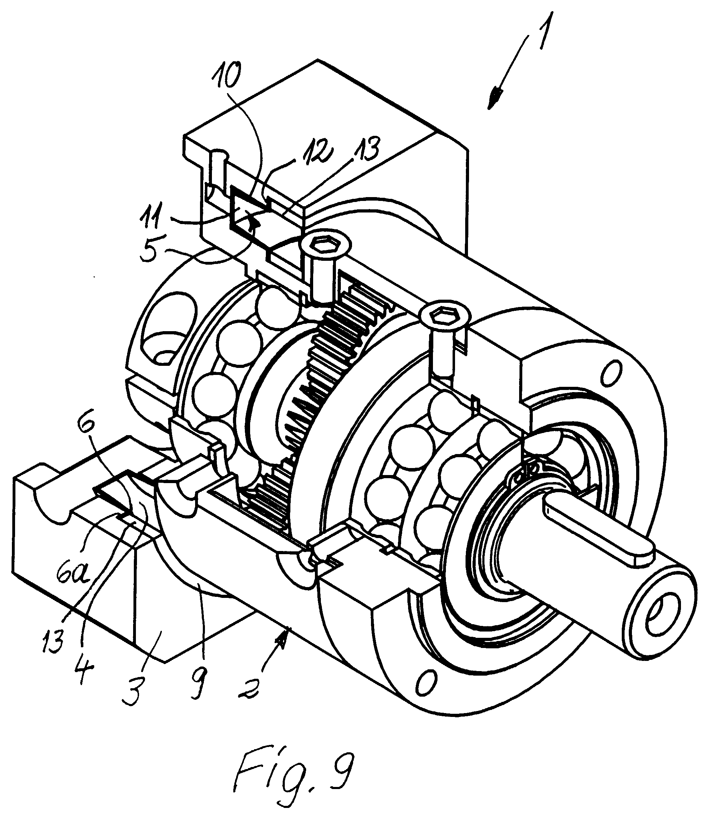

- Fig.9: eine der Fig.1 entsprechende Darstellung eines Gehäuses mit Befestigungsflansch eines Planetengetriebes gemäß Fig.8 nach der Montage, wobei die Membrane durch den Innendruck des Getriebes in axialer Richtung umgestülpt ist.

Ein im ganzen mit 1 bezeichnetes Getriebe, im Ausführungsbeispiel ein Planetengetriebe, hat ein Gehäuse 2, zu welchem auch ein Befestigungsflansch 3 gehört, in welchem eine Entlüftungsöffnung 4 angeordnet ist. In dieser Entlüftungsöffnung 4 ist eine durch Druckunterschiede verformbare Membrane 5 angeordnet und mit ihrem Halterand 6 in Gebrauchsstellung befestigt, wobei Fig.1 die Anordnung vor der Befestigung und die Figuren 2 und 3 die Befestigungsstellung zeigen. Die eine Seite der Membrane ist dabei mit dem Inneren des Gehäuses 2 über einen Kanal oder eine Öffnung 7 und die andere Seite mit der äußeren Umgebung, über eine Öffnung 8 in einem Deckel 9, in Verbindung.

Vor allem in Fig.1, in welchem etwa eine Hälfte einer Ausführungsform der Membrane 5 dargestellt ist, während die andere, etwa spiegelsymmetrische Hälfte, aufgrund der Schnittdarstellung weggelassen ist, sowie gemäß den Figuren 4 bis 7 ist die Membrane 5 im wesentlichen kappenförmig ausgebildet und weist ausgehend von ihrem umlaufenden Halterand 6 eine über wenigstens einen Teil dieses Halterandes 6 verlaufende, in den dargestellten Ausführungsbeispielen über den gesamten Halterand 6 umlaufende Seitenwand 10 sowie einen Boden 11 auf, in den die Seitenwand 10 jeweils übergeht. Dadurch ist es möglich, daß wenigstens ein Teil oder die gesamte Seitenwand 10 zusammen mit dem Boden 11 gegenüber dem Halterand 6 beweglich und gemäß Fig.3 umstülpbar ist.

Fig.2 zeigt die Ausgangslage, bei welcher der Druck im Inneren des Gehäuses 2 und der Umgebungsdruck etwa gleich sein mögen. Steigt nun im Inneren des Gehäuses 2 der Druck beispielsweise durch zunehmende Erwärmung an, kann sich die im Gehäuseinneren befindliche Luft über einen nicht näher dargestellten, zu der Öffnung 7 führenden Kanal und diese Öffnung 7 in die Entlüftungsöffnung 4 ausdehnen. Sie wird aber am Austritt durch die Membrane 5 gehindert. Die Membrane 5 wird durch den zunehmenden Druck mehr und mehr nach außen verformt und umgestülpt, wobei die an der Außenseite der Membrane 5 befindliche Luft dann durch die Öffnung 8 in dem Deckel 9 entweichen kann. Nimmt der Druck innerhalb des Gehäuses 2 wieder ab, erfolgt wieder eine Rückverformung der Membrane 5 in ihre Ausgangslage.

In allen Figuren erkennt man, daß in den dargestellten Ausführungsbeispielen der Boden 11 der Membrane 5 etwa parallel zu der von ihrem Halterand 6 aufgespannten Ebene verläuft und die umlaufende Seitenwand 10 demgemäß über ihre gesamte Erstreckung am gesamten Umfang der Membrane jeweils eine im wesentlichen gleichbleibende Höhe hat. Dies ergibt eine bestmögliche Ausnutzung der Membrane-Grundfläche für ein möglichst großes Ausgleichsvolumen.

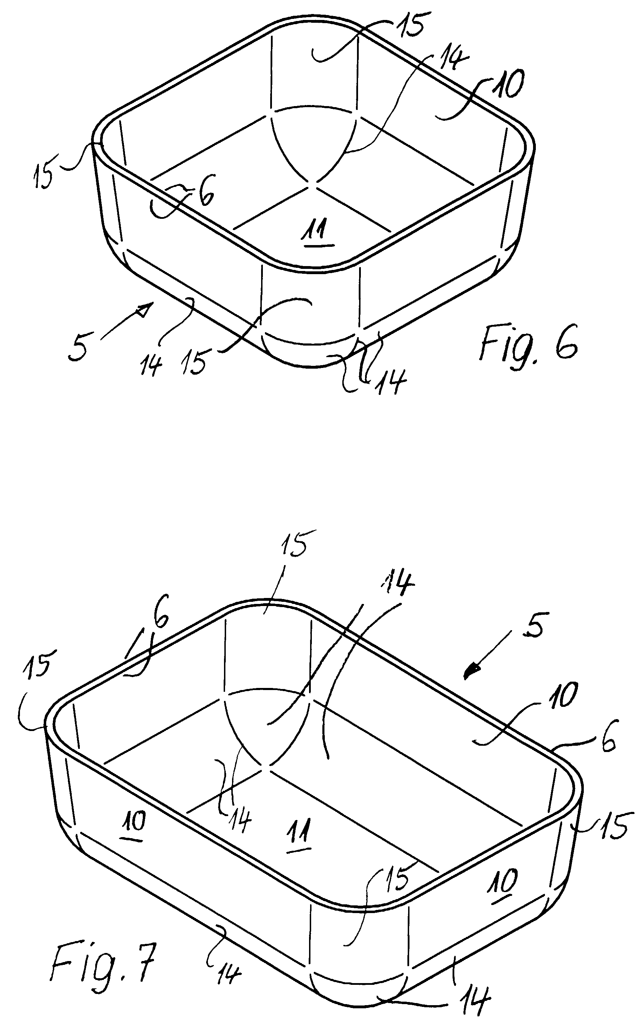

Die von dem Halterand 6 der Membrane 5 gebildete Grundrißlinie kann unterschiedliche Formen haben und gemäß Fig.1 bis 4 oder 7 rechteckig, gemäß Fig.6 etwa quadratisch oder gemäß Fig.5 oval ausgebildet sein. Denkbar wäre auch eine Ausbildung, bei welcher zwei etwa parallele Seitenbegrenzungslinien und bogenförmige Übergänge einen "ovalen" Grundriß bilden. Somit kann die Membrane 5 je nach Platz an einem Gehäuse 2 oder Flansch 3 so gestaltet sein, daß eine optimale Platzausnutzung ermöglicht wird.

Die in der Gehäusewand bzw. im Ausführungsbeispiel in dem Befestigungsflansch 3 des Getriebes 1 angeordnete Entlüftungsöffnung 4 ist gemäß Fig.3 etwa doppelt so tief wie die Höhe der Seitenwand 10 der Membrane 5, das heißt in etwa radialer Richtung, in welcher auch die Ausstülpung der Membrane 5 erfolgt, ist die Entlüftungsöffnung 4 doppelt so groß wie die unverformte Membrane bemessen. Die Befestigung des Halterandes 6 der Membrane 5 befindet sich dabei in etwa halber Höhe der Entlüftungsöffnung 4, so daß einerseits die Ausgangslage gemäß Fig.2 ermöglicht wird, in welcher die Membrane 5 sich in der unteren Hälfte der Entlüftungsöffnung 4 erstreckt, andererseits aber auch die Ausstülpung gemäß Fig.3 ermöglicht wird, in welcher die Membrane 5 nun die obere Hälfte dieser Entlüftungsöffnung 4 benötigt, ohne über den äußeren Umriß des Gehäuses 2 oder des Flansches 3 hinauszuragen.

Zusätzlich ist im Ausführungsbeispiel die Entlüftungsöffnung 4 mit einem lösbaren oder öffenbaren Abschlußdeckel 9 versehen, der auch die Öffnung 8 für den Luftausgleich zwischen der Außenseite der Membrane 5 und der Umgebung enthält. Denkbar wäre allerdings auch, daß eine solche Öffnung 8 von der Seite her in die Entlüftungsöffnung 4 eingebracht wird.

Im Ausführungsbeispiel gemäß den Figuren 1 bis 3 hat die Membrane 5 an ihrem Halterand 6 einen nach außen überstehenden Flansch 6a zum Einklemmen innerhalb der Entlüftungsöffnung 4 für die Befestigung der Membrane 5 auf. Der Abschlußdeckel 9 ist dabei gleichzeitig zum Einspannen der Membrane 5 bzw. zum Einklemmen ihres Halterandes und des Flansches 6a im Inneren der Entlüftungsöffnung 4 an einem Gegenabsatz 12 vorgesehen. Der Abschlußdeckel 9 hat dazu einen in das Innere der Entlüftungsöffnung 4 passenden und eingreifenden und entlang der Wandung dieser Entlüftungsöffnung 4 verlaufenden Rand 13, der den flanschartig umlaufenden Halterand 6 bzw. den Flansch 6a der Membrane 5 gegen eine Anlagefläche an dem Gegenabsatz 12 im Inneren der Entlüftungsöffnung 4 drückt und festlegt. Man erkennt diese Anordnung deutlich in Fig.2 und 3. Dabei wird auch erkennbar, daß der an dem Deckel 9 umlaufende Rand 13 in seiner Dicke etwa der Abmessung des Gegenabsatzes 12 entspricht, so daß die Membrane 5 sowohl im unteren Teil der Entlüftungsöffnung 4 als auch in deren oberen Teil praktisch innerhalb des Deckels 9 und des an diesem umlaufenden Randes 13 jeweils gleich viel Platz hat.

Bei allen Ausführungsbeispielen der Membrane 5 sind der Übergang 14 zwischen der Seitenwand 10 und dem Boden 11 und die Richtungswechsel 15 der Seitenwand 10 mit relativ großem Krümmungsradius gerundet. Sie könnten stattdessen auch abgeschrägt sein. Dies erleichtert das Umstülpen und insbesondere auch das allmähliche Verformen der Membrane 5 bei ansteigendem Druck. Somit kann vermieden werden, daß sich im Inneren des Gehäuses 2 zunächst ein größerer Druck mit allen Nachteilen für Getriebedichtungen und dergleichen aufbaut, bevor dann die Membrane 5 plötzlich umgestülpt wird.

Vielmehr wird bei zunehmendem Druck allmählich der Boden 11 gewölbt und dadurch die Seitenwand 10 nach innen gezogen werden, wodurch sie dann mehr und mehr radial nach außen verlagert wird, bis sie ihre größtmögliche Verformung etwa gemäß Fig.3 erreicht hat.

Der Krümmungsradius am Übergang 14 zwischen Seitenwand 10 und Boden 11 oder bei Richtungswechseln 15 der Seitenwand 10 ist dabei groß gewählt und entspricht wenigstens etwa einem Viertel oder einem Drittel, gegebenenfalls der Hälfte oder auch der gesamten Höhe der Seitenwand 10. Man erkennt in den Ausführungsbeispielen deutlich, daß dieser gerundete oder eventuell abgeschrägte Bereich einen relativ großen Anteil an der jeweiligen Abmessung der Membrane 5 hat. Dadurch wird vorstellbar, daß eine solche Membrane 5 die Forderung nach einem relativ großen Ausgleichsvolumen einerseits und dabei auch ein feinfühliges Anpassen an allmähliche Druckänderungen andererseits gut erfüllen kann.

Hinzu kommt, daß die Membrane 5 einstückig aus flexiblem Gummi oder Kunstgummi oder aus einem flexiblen thermoplastischen Elastomer besteht und neben einer guten Biegsamkeit auch eine elastische Dehnfähigkeit aufweist. Somit kann bei weiter zunehmendem Druck die Membrane gegenüber der in Fig.3 dargestellten Lage noch etwas gedehnt werden, so daß sie die inneren Ecken zwischen dem Rand 13 und dem Deckel 9 noch besser ausfüllen kann, indem sie sich in diese in Fig.3 noch freien Räume hineindehnen läßt.

Die umlaufende Seitenwand 10 ist nämlich aus Fertigungsgründen in den Ausführungsbeispielen gegenüber der von dem Halterand 6 aufgespannten Ebene in unverformter Lage unter einem kleineren Winkel als 90° angeordnet, hat also von dem Halterand 6 zu dem Boden 11 hin eine sich leicht konisch verjüngende Form. Die Abweichung von 90° kann beispielsweise 5° betragen. Auch diese fertigungsbedingte Abweichung der Seitenwand von einer absoluten Parallelität kann aufgrund der Dehnfähigkeit der Membran bei Zunahme des Innendruckes im Gehäuse 2 noch zum Druckausgleich beitragen, weil die Membrane so weit verformt werden kann, daß sie sich im Inneren des Deckels 9 an dessen Wandung 13 anlegt.

Unterstützt wird eine solche Ausnutzung des Volumens der Entlüftungsöffnung 4 durch die Dehnbarkeit der Membrane 5 dadurch, daß die Dicke der Membrane 5 einen Millimeter oder weniger, insbesondere etwa drei Viertel Millimeter, bevorzugt einen halben Millimeter oder sogar noch etwas weniger beträgt.

In dem etwas abgewandelten Ausführungsbeispiel eines Getriebes 1 gemäß den Figuren 8 und 9 ist die von dem Halterand 6 der Membrane 5 gebildete Grundrißform ein Kreis, wobei aber die Membrane 5 zwei parallele, kreisförmig umlaufende Seitenwände 10 hat, die durch den Boden 11 dieser Membrane 5 zu einem U-förmigen Querschnitt verbunden sind, wobei diese Seitenwände 10 und der Boden 11 als Ring, insbesondere als Kreisring ausgebildet sind. In Fig.8 ist ein Teil dieses Kreisringes dargestellt. Dabei könnte auch nur ein Ringsegment als Membrane 5 vorgesehen sein, wenn nämlich der Kreis nicht geschlossen ist und die Enden der so gebildeten ringsegmentförmigen Membrane mit Abschlußwänden versehen sind.

Diese kreisringförmige Membrane 5 paßt gemäß Fig.8 und 9 in eine entsprechend ringförmige, die Entlüftungsöffnung 4 bildende Nut, die im Ausführungsbeispiel an dem Befestigungsflansch 3 konzentrisch zu dessen Mitte und zu einer Lagerstelle für Getriebeteile angeordnet ist und somit den durch den Befestigungsflansch 3 benötigten Platz bestmöglich und gleichzeitig mit einem großen Volumen dieser Entlüftungsöffnung 4 ausnutzt.

Auch in diesem Falle laufen die einander gegenüberliegenden parallelen Seitenwände 10 im Querschnitt von dem Boden 11 ausgehend etwas auseinander, wobei sie im Querschnitt geradlinig schräg sind, so daß sich der Querschnitt dieser ringförmigen Membrane 5 von dem Boden 11 zu dem Halterand 6 hin wiederum erweitert, was das Umstülpen bei Druckschwankungen erleichtert. Dabei öffnet sich die nutförmige Entlüftungsöffnung 4 zu dem Getriebe 1 hin, welches in Montagestellung also auch den Deckel 9 festlegt. Somit ist die Außenseite 3a des Flansches 3 trotz der ringförmigen Druckausgleichs- oder Entlüftungsöffnung 4 unverändert.

In Fig.8 und 9 erkennt man ferner, daß an dieser ringförmigen oder ringsegmentförmigen Membrane 5 an den dem Boden abgewandten Rändern 8 jeweils ein Flansch 6a an dem Halterand 6 umläuft, wobei diese beiden Flansche 6a jeweils radial voneinander weggerichtet sind. Der kreisringförmige oder ringsegmentförmige Deckel 9 hat einen etwa U-förmigen Querschnitt und ist zum insbesondere lösbaren Verschließen der ringförmigen oder ringsegmentförmigen Entlüftungsöffnung 4 und zum Festlegen der ringförmigen oder ringsegmentförmigen Membrane 5 von der Getriebeseite her geeignet und vorgesehen. Demgemäß hat auch dieser Deckel 9 in die Entlüftungsöffnung 4 passende, ringförmig verlaufende Ränder 13, die die flanschartig umlaufenden Halteränder 6 beziehungsweise die Flansche 6a der Membrane 5 in gleicher Weise wie bei dem vorhergehend beschriebenen Ausführungsbeispiel gegen eine Anlagefläche an einem Gegenabsatz 12 im Inneren der Entlüftungsöffnung 4 drücken und festlegen. Diese Gegenabsätze 12 verlaufen dabei gemäß Fig.8 ebenfalls ringförmig und konzentrisch zu der Entlüftungsöffnung 4 um.

An der Oberseite hat auch dieser ringförmige Deckel 9 wenigstens eine Öffnung 8 bevorzugt mehrere an seinem Umfang verteilte derartige Öffnungen 8 für den Luftaustausch, die in diesem Ausführungsbeispiel allerdings die Verbindung zum Inneren des Getriebegehäuses 2 herstellen. Für den entsprechenden Luftausgleich nach außen sind in dem Flansch 3 in die Entlüftungsöffnung 4 mündende Bohrungen oder Kanäle 14 vorgesehen.

Im Ausführungsbeispiel gemäß Fig.8 und 9 hat also die dem Druckausgleich dienende Membrane 5 eine Querschnitt, der dem der Membrane 5 gemäß Fig.1 bis 3 etwa entspricht und auch so funktioniert, ist aber dabei ringförmig gestaltet, so daß die entsprechende Entlüftungsöffnung ebenfalls ringförmig verläuft und beispielsweise durch Drehen parallel zum Ausdrehen der Lagerstelle gefertigt werden kann. Bei der gewählten Anordnung kann der Deckel 9 durch das Gehäuse 2 fixiert werden.

Es sei noch erwähnt, daß auch eine Membrane gemäß den Figuren 1 bis 7 mit einem kreisförmig verlaufenden Halterand 6 und gegebenenfalls einen einzigen Kreisring bildenden Halteflanschen 6a ausgestaltet sein könnte, um die Entlüftungsöffnung 4 durch einen einfacheren Fräs- oder Bohrvorgang anbringen zu können.

Das Gehäuse 2 beispielsweise eines Getriebes 1 weist selbst oder in einem ihm zugehörenden Flansch 3 wenigstens eine Entlüftungsöffnung 4 auf, in welcher eine durch Druckunterschiede verformbare Membrane 5 angeordnet ist, die einen Luftzutritt in das Innere des Gehäuses 2 unterbindet und dennoch einen Druckausgleich erlaubt, weil eine Seite der Membrane 5 mit dem Inneren des Gehäuses 2 beispielsweise über eine Öffnung 7 und Kanäle oder dergleichen und die andere Seite der Membrane 5 mit der äußeren Umgebung in Verbindung sind. Die Membrane 5 ist für eine bestmögliche Volumenausnutzung im wesentlichen kappenförmig ausgebildet und hat ausgehend von einem umlaufenden Halterand 6 eine über wenigstens einen Teil dieses Halterandes 6 verlaufende oder am gesamten Halterand 6 umlaufende Seitenwand 10 sowie einen Boden 11, in den diese Seitenwand 10 übergeht. Dabei ist wenigstens ein Teil bzw. die gesamte Seitenwand 10 zusammen mit dem Boden 11 gegenüber dem Halterand 6 beweglich und umstülpbar, so daß eine solche Membrane insgesamt ein großes Entlüftungsvolumen auf kleinem Raum umgrenzt.

## Patentansprüche

1. Getriebe (1), insbesondere Planetengetriebe, mit einem Gehäuse (2) und mit wenigstens einer in der Gehäusewand (2,3) angeordneten Entlüftungsöffnung (4), in welcher eine durch Druckunterschiede verformbare Membane (5) angeordnet und mit einem Halterand (6) befestigt ist, wobei eine Seite der Membrane (5) mit dem Inneren des Gehäuses (2) und die andere Seite mit der äußeren Umgebung in Verbindung sind, **dadurch gekennzeichnet**, daß die Membrane (5) im wesentlichen kappenförmig ausgebildet ist und ausgehend von ihrem umlaufenden Halterand (6) eine über wenigstens einen Teil dieses Halterandes (6) verlaufende oder an dem gesamten Halterand (6) umlaufende Seitenwand (10) sowie einen Boden (11) aufweist, in den die Seitenwand (10) übergeht, und daß wenigstens ein Teil der Seitenwand (10) zusammen mit dem Boden (11) gegenüber dem Halterand (6) beweglich und umstülpbar ist.

2. Getriebe nach Anspruch 1, dadurch gekennzeichnet, daß der Boden (11) der Membrane (5) etwa parallel zu der von ihrem Halterand (6) aufgespannten Ebene verläuft und die umlaufende Seitenwand (10) über ihre gesamte Erstreckung jeweils eine im wesentlichen gleichbleibende Höhe hat.

3. Getriebe nach Anspruch 1 oder 2, dadurch gekennzeichnet, daß die von dem Halterand (6) der Membrane (5) gebildete Grundrißlinie im wesentlichen etwa rechteckig, quadratisch oder oval ausgebildet ist und vorzugsweise wenigstens zwei etwa parallele Seitenbegrenzungslinien hat.

4. Getriebe nach einem der Ansprüche 1 bis 3, dadurch gekennzeichnet, daß die von dem Halterand (6) der Membrane (5) gebildete Grundrißform ein Kreis oder ein Ring, insbesondere ein Kreisring oder ein Ringsegment ist und in eine Entlüftungsöffnung (4) paßt, die die Form eines Zylinders oder einer Ringnut hat.

5. Getriebe nach einem der Ansprüche 1 bis 4, dadurch gekennzeichnet, daß die Membrane (5) zwei parallele Seitenwände (10) hat, die durch den Boden (11) der Membrane (5) zu einem U-förmigen Querschnitt verbunden sind, wobei diese Seitenwände (10) und der Boden (11) als Ring, insbesondere Kreisring oder als Ringsegment ausgebildet sind.

6. Getriebe nach einem der Ansprüche 1 bis 5, dadurch gekennzeichnet, daß die Entlüftungsöffnung (4) in der Gehäusewand (2) oder in einem Befestigungsflansch (3) des Getriebes (1) angeordnet und wenigstens doppelt so tief wie die Höhe der Seitenwand (10) der Membrane (5) ist und daß die Befestigung des Halterandes (6) der Membrane (5) etwa in halber Höhe dieser Entlüftungsöffnung (4) vorgesehen ist.

7. Getriebe nach einem der Ansprüche 1 bis 6, dadurch gekennzeichnet, daß die Entlüftungsöffnung (4) einen insbesondere lösbaren oder öffenbaren Abschlußdeckel (9) aufweist.

8. Getriebe nach einem der Ansprüche 1 bis 7, dadurch gekennzeichnet, daß die Membrane (5) an ihrem Halterand (6) einen nach außen überstehenden Flansch (6a) zum Einklemmen innerhalb der Entlüftungsöffnung (4) für ihre Befestigung aufweist.

9. Getriebe nach einem der Ansprüche 1 bis 8, dadurch gekennzeichnet, daß der Abschlußdeckel (9) gleichzeitig zum Einspannen der Membrane (5) beziehungsweise ihres Halterandes (6) im Inneren der Entlüftungsöffnung (4) an einem Gegenabsatz (12) vorgesehen ist und dazu in das Innere der Entlüftungsöffnung (4) eingreifende, vorzugsweise entlang der Wandung der Entlüftungsöffnung (4) verlaufende Vorsprünge oder einen umlaufenden Rand (13) aufweist, der den insbesondere flanschartig umlaufenden Halterand (6) der Membrane (5) gegen eine Anlagefläche im Inneren der Entlüftungsöffnung (4) drückt und festlegt.

10. Getriebe nach einem der Ansprüche 1 bis 9, dadurch gekennzeichnet, daß der Übergang zwischen der Seitenwand (10) und dem Boden (11) der Membrane und/oder Richtungswechsel der Seitenwand (10) gerundet oder abgeschrägt sind.

11. Getriebe nach einem der Ansprüche 1 bis 10, dadurch gekennzeichnet, daß der Krümmungsradius am Übergang (14) zwischen Seitenwand (10) und Boden (11) oder bei Richtungswechseln (15) der Seitenwand (10) groß gewählt ist und wenigstens etwa einem Viertel oder einem Drittel, gegebenenfalls der Hälfte oder der gesamten Höhe der Seitenwand (10) entspricht.

12. Getriebe nach einem der Ansprüche 1 bis 11, dadurch gekennzeichnet, daß die Membrane (5) einstückig aus flexiblem Gummi oder Kunstgummi oder aus einem flexiblen thermoplastischen Elastomer besteht und eine elastische Dehnfähigkeit aufweist.

13. Getriebe nach einem der Ansprüche 1 bis 12, dadurch gekennzeichnet, daß die umlaufende Seitenwand (10) gegenüber der von dem Halterand (6) aufgespannten Ebene in unverformter Lage unter einem kleineren Winkel als 90° angeordnet und demgemäß schräg zur Mitte der Membrane (5) hin geneigt ist, so daß die Fläche des Bodens (11) kleiner als die von dem Halterand (6) umgrenzte Fläche ist.

14. Getriebe nach einem der Ansprüche 1 bis 13, dadurch gekennzeichnet, daß zwischen den Wandungen der Entlüftungsöffnung (4) und dem Abschlußdeckel (9) im Querschnitt gesehen ein rechter Winkel vorgesehen ist.

15. Getriebe nach einem der Ansprüche 1 bis 14, dadurch gekennzeichnet, daß die Dicke der Membrane (5) einen Millimeter oder weniger, insbesondere etwa dreiviertel Millimeter, einen halben Millimeter oder weniger beträgt.

16. Getriebe nach einem der Ansprüche 1 bis 15, dadurch gekennzeichnet, daß die ringförmige Entlüftungsöffnung (4) mit der Membrane (5) in dem Flansch (3) konzentrisch zu einer Lagerstelle angeordnet ist und ihre offene Seite insbesondere dem Getriebe (1) und seinem Gehäuse (2) zugewandt ist.
